# EUROPEAN PATENT APPLICATION

(11) **EP 2 093 822 A2**
(43) Date of publication of application: **26.08.2009**
(21) Application number: 09002283.1
(22) Date of filing: 18.02.2009
(51) Int. Cl.: H01M 8/02, H01M 8/24

(54) **Fuel cell stack assembly**

(30) Priority: 19.02.2008 TW 97105740
(71) Applicant: Asia Pacific Fuel Cell Technologies, Ltd., Chunan, Miaoli 350 (TW)
(72) Inventor: Yang, Jefferson, YS, Orange CA 92869 (US); Hsu, Mao-Chun, Chunan Miaoli 350 (TW); Hsiao, Feng-Hsiang, Chunan Miaoli 350 (TW); Tseng, Wen-Yi, Chunan Miaoli 350 (TW)
(74) Representative: Goddar, Heinz J.

(57) **Abstract**

A fuel cell stack assembly includes a fuel cell stack (1), a first pressure-supporting end plate assembly (2), a first current collector plate (26), a second pressure-supporting end plate assembly (4), a second current collector plate (49), and a pressure-applying structure. The first pressure-supporting end plate assembly (2) is coupled to a first electrode side (11) of the fuel cell stack through the first end plate (20) and the first current collector plate (26), and the second pressure-supporting end plate assembly (4) is coupled to a second electrode side (12) of the fuel cell stack through the second end plate (40) and the second current collector plate (49). The pressure-applying structure includes a pressure-applying plate and a pair of side plates form therebetween an open end. The pressure-applying plate is set abutting against a plate surface of the second pressure-supporting end plate assembly with the open end thereof located on opposite sides of the first end plate and coupled to the coupling section (21) of the first end plate (20) through a positioning structure.

## Description

### FIELD OF THE INVENTION

The present invention relates to a fuel cell assembly structure, and in particular to a pressure-supporting assembly structure for a fuel cell stack.

### BACKGROUND OF THE INVENTION

Fuel cells are a device that makes use of electro-chemical reaction between a fuel containing hydrogen and air to generate electrical power and water. As to the operation principle of the fuel cell, taking proton exchange membrane fuel cell (PEMFC) as an example, the fuel cell comprises a plurality of fuel cell units each comprising a proton exchange membrane set at a center and two catalyst layers arranged on opposite sides and further comprising a gas diffusion layer (GDL) set outside each catalyst layer and an anode bipolar plate and a cathode bipolar plate respectively set on the outer sides, all the components being tightly fixed together with a predetermined contact pressure therebetween to form a single fuel cell unit.

To carry out the electro-chemical reaction by the fuel cell to convert chemical energy into electric energy, the pressure of the fuel cell stack must be maintained within a fixed range to avoid excessively high contact resistance that affects the conversion efficiency of the fuel cell.

In practical applications of the fuel cell, in order to obtain sufficient electrical power, a plurality of fuel cell units is stacked and connected serially to form a fuel cell stack, opposite ends of which in the longitudinal direction are respectively provided with two end plates and a plurality of tie rods extending through circumferential edges of the two end plates that fix the fuel cell stack between the end plates.

US Patent No. 5,993,987 discloses a compression band for electro-chemical fuel cell stack, wherein the fuel cell stack comprises a plurality of fuel cell assemblies that are interposed between a pair of end plate assemblies. The pair of end plate assemblies includes a first end plate and a second end plate. Each single fuel cell assembly includes an anode layer and a cathode layer.

The end plate assemblies further comprise a resilient compression assembly that comprises an elongate compression band circumscribing in a single pass the first and second end plate assemblies to cause the first and second end plate assemblies to apply a compression force to the fuel cell stack thereby securely holding the fuel cell assemblies of the fuel cell stack. Such an arrangement, although facilitating assembling operation, shows various drawbacks.

### SUMMARY OF THE INVENTION

First of all, to assemble the components of the known fuel cell stack discussed above, if an excessive contact pressure is applied to the individual fuel cell assembly, the fuel cell assembly may undergo deformation or warping, and even destruction of the construction thereof. Particularly, when the fuel cell stack is subjected to unduly or uneven distribution of contact pressure, the performance of the individual fuel cell units is affected. In case of insufficient contact pressure, the engagement tightness between the fuel cell assemblies may be poor, leading to leakage of water or gas and causing increased contact resistance between layers of the fuel cell stack, and as a consequence, the performance of the fuel cell stack deteriorates.

Further, in respect of mechanical strength, the individual fuel cell assembly contained in the fuel cell stack has a poor pressure resistance, so that in practical application, an additionally provided enclosure and protection structure, such as a protection frame or a protection shell, must be employed to protect the stacked components of a completely assembled fuel cell stack, otherwise the fuel cell stack may be susceptible to risks of being damaged, distortion and deformation when impacted or hit.

Thus, an objective of the present invention is to provide a pressure-supporting assembly structure for a fuel cell stack, which offers certain protection to the components of the fuel cell stack and simplifies maintenance and repairing.

Another objective of the present invention is to provide a pressure-supporting assembly structure for a fuel cell stack, which provides an optimum contact pressure between individual fuel cell units of the fuel cell stack.

A further objective of the present invention is to provide a pressure-supporting assembly structure for a fuel cell stack, which adjusts the contact pressure between fuel cell units and end plates of the fuel cell stack so as to make the application of the fuel cell flexible.

The technical solution that the present invention adopts to overcome the above discussed problems is a pressure-supporting structure for a fuel cell stack, comprising a fuel cell stack, a first pressure-supporting end plate assembly, a first current collector plate, a second pressure-supporting end plate assembly, a second current collector plate, a pressure-supporting structure, and a pressure-applying structure. The fuel cell stack comprises a first electrode side, a second electrode side and at least one fuel cell unit. The first pressure-supporting end plate assembly is coupled to the first electrode side of the fuel cell stack through a first end plate and the first current collector plate, and the second pressure-supporting end plate assembly is coupled to the second electrode side of the fuel cell stack through a second end plate and the second current collector plate.

The pressure-applying structure is comprised of a pressure-applying plate and a pair of side plates extending from opposite side edges of the pressure-applying plate. The two side plates form an open end therebetween. When the fuel cell stack, the first pressure-supporting end plate assembly, the first current collector plate, the second pressure-supporting end plate assembly, the second current collector plate, and the pressure-supporting structure are assembled together, the pressure-applying plate of the pressure-applying structure abuts against a surface of the second end plate of the second pressure-supporting end plate assembly with the open end thereof located on opposite sides of the first end plate and fixed to a coupling section of the first end plate through a positioning structure.

The pressure-supporting structure is interposed between the first end plate and the coupling section and applies a pressure to the fuel cell stack in a direction from the first pressure-supporting end plate assembly toward the second pressure-supporting end plate assembly in order to provide the requisite contact pressure to each individual fuel cell unit of the fuel cell stack.

With the technical solution adopted in the present invention, a modularized arrangement of the fuel cell stack assembly structure is provided, which effectively enhances the assembling efficiency of the fuel cell stack, whereby when abnormality or damage occurs in the assembly structure of the present invention, it only needs to replace the problematic fuel cell unit and the drawbacks that the conventional techniques encountered by replacement of the whole fuel cell stack that inevitably increases the costs can be eliminated.

For the structural arrangement, the present invention employs only a single pressure-applying structure having an open end, together with a plurality of resilient elements assembled inside the assembly structure, to fulfill the objective of supplying a requisite pressure to the fuel cell stack. Further, such an arrangement is capable of uniformly applying pressure, so that the optimum contact pressure can be provided between the fuel cell units of the fuel cell stack. Problems of for example water leakage, gas leakage, and increased contact resistance between layers of the fuel cell stack resulting from poor engagement tightness of the fuel cell stack caused by insufficient contact pressure, or problems of deformation and warping of the individual fuel cell units or even destruction of the construction of the fuel cell stack caused by excessive pressure that lead to deterioration of fuel cell performance occurring in the conventional techniques can thus be eliminated. Other conventional measures, such as tie rod, are also problematic to the assembling of the fuel cell stack.

Further, in the present invention, the first pressure-supporting end plate assembly and the second pressure-supporting end plate assembly coupled to the two electrode sides of the fuel cell stack are both provided with cooling water inlet and outlet ports and hydrogen inlet and outlet ports, whereby the contact area for reaction is increased, the conductivity and permeability of the fuel cells stack are enhanced, and thus the performance of the fuel cell stack is improved.

Further, the pressure-applying structure can protect all the related structures of the fuel cell stack and provide certain protection to each related structure of the fuel cell to avoid damage, distortion, or detachment of the fuel cell stack caused by external impact or hit.

### BRIEF DESCRIPTION OF THE DRAWINGS

The present invention will be apparent to those skilled in the art by reading the following description of preferred embodiments thereof with reference to the drawings, in which:

**Figure 1** is an exploded view of a first embodiment in accordance with the present invention;

**Figure 2** is an exploded view of a portion of the structure of the present invention;

**Figure 3** is a perspective view of the first embodiment of the present invention;

**Figure 4** is another perspective view of the first embodiment of the present invention taken at a different angle;

**Figure 5** is an exploded view of a second embodiment in accordance with the present invention;

**Figure 6** is an exploded view of a third embodiment in accordance with the present invention;

**Figure 7** is a bottom view of the third embodiment in accordance with the present invention;

**Figure 8** is an exploded view of a fourth embodiment in accordance with the present invention;

**Figure 9** is a perspective view of the fourth embodiment of the present invention;

**Figure 10** is an exploded view of a fifth embodiment in accordance with the present invention;

**Figure 11** is an exploded view of a sixth embodiment in accordance with the present invention; and

**Figure 12** is a perspective view of the sixth embodiment of the present invention.

### DETAILED DESCRIPTION OF THE PREFERRED EMBODIMENTS

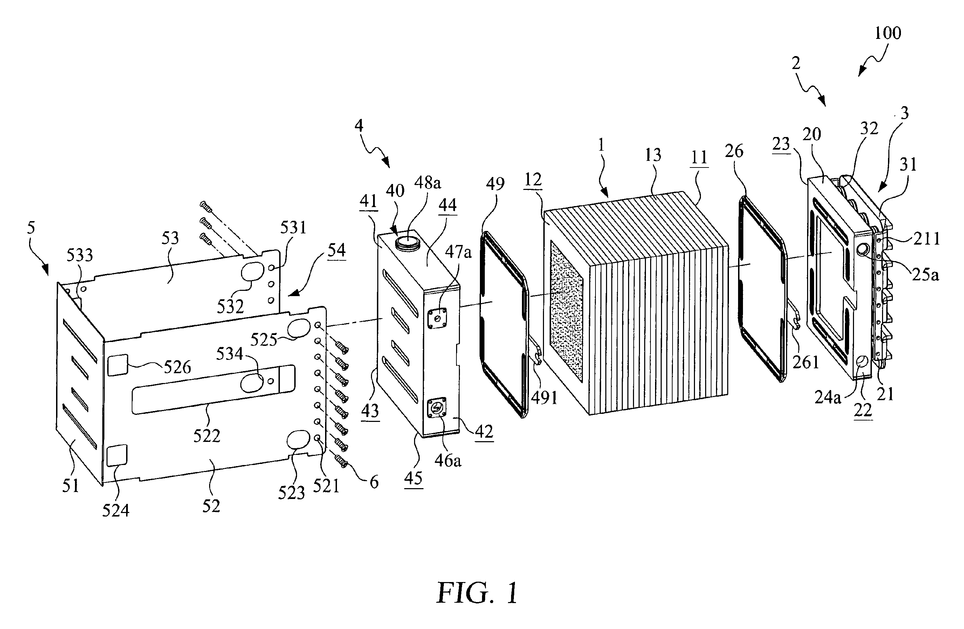

With reference to the drawings and in particular to **Figure 1****,** which shows an exploded view of a first embodiment of the present invention, the present invention provides a pressure-supporting assembly structure **100** for a fuel cell stack, which comprises a fuel cell stack **1** having a first electrode side **11** and a second electrode side **12** and being comprised of at least one fuel cell unit **13.**

The first electrode side **11** of the fuel cell stack **1** is coupled to a first pressure-supporting end plate assembly **2,** with a first current collector plate **26** positioned therebetween. The first pressure-supporting end plate assembly **2** comprises a first end plate **20** and a coupling section **21,** wherein the coupling section **21** has opposite side walls each forming a row of apertures **211, 212.**

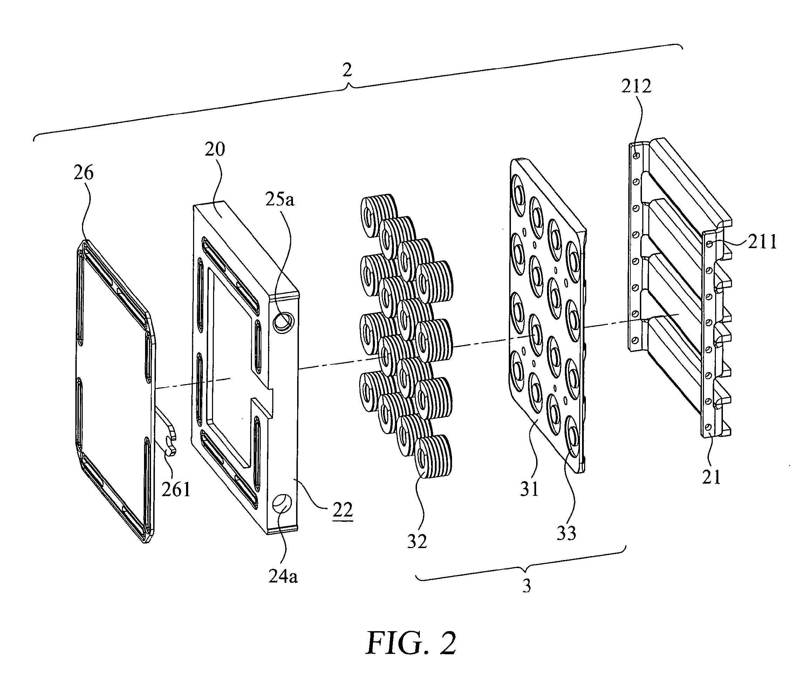

The first end plate **20** and the coupling section **21** of the first pressure-supporting end plate assembly **2** are provided therebetween a pressure-supporting structure **3** (see **Figure 2**), which is comprised of a pressure-supporting plate **31** and a plurality of resilient elements **32.** The pressure-supporting plate **31** forms a plurality of pressure-supporting holes **33** corresponding to the resilient elements **32** respectively for receiving the resilient elements **32** therein. In the instant embodiment, the resilient elements **32** comprise disc springs, but can adopt other types of resilient elements, such as an elastic block, a spring plate, a piston, a polymer or fiber-reinforced composite material, or other chemical polymer, provided they offer a predetermined resilient behavior, and the selection is dependent on the applications.

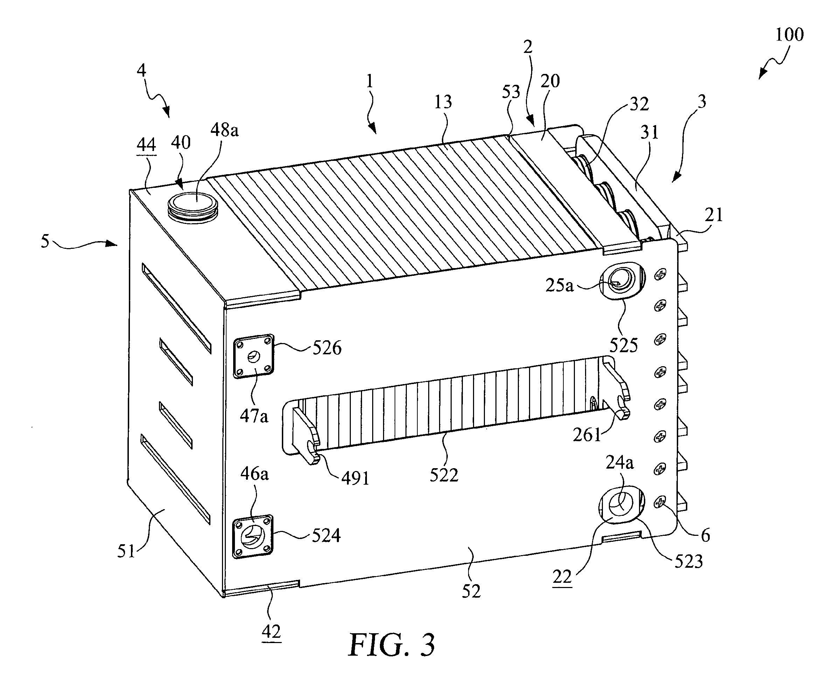

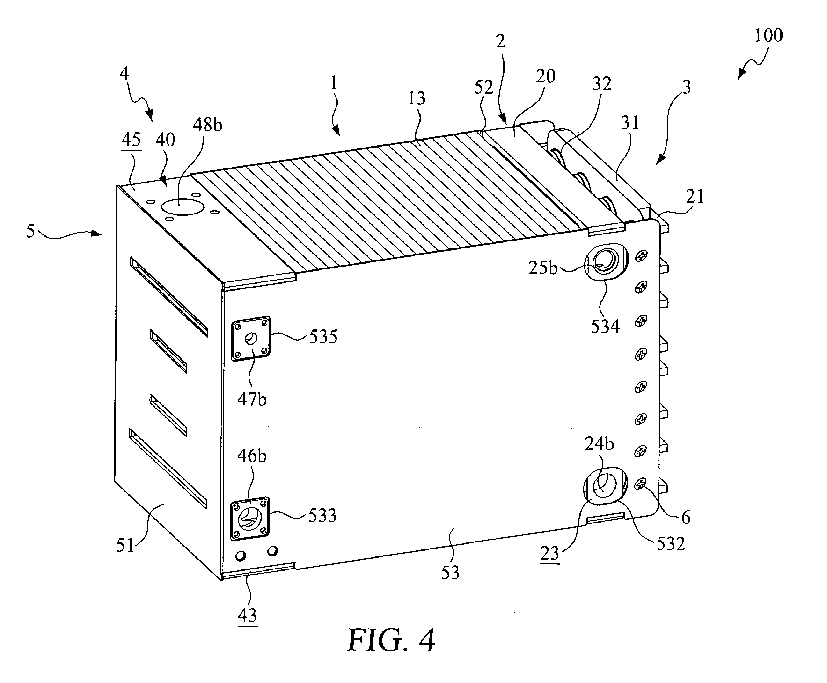

Also referring to **Figures 3** and **4****,** which show perspective views of the first embodiment of the present invention taken at different angles respectively, the first end plate **20** of the first pressure-supporting end plate assembly **2** further comprises a first side face **22** and a second side face **23.** The two side faces forms corresponding cooling water inlet and outlet ports **24a, 24b,** and corresponding hydrogen inlet and outlet ports **25a, 25b.**

The second electrode side **12** of the fuel cell stack **1** is coupled to a second pressure-supporting end plate assembly **4** with a second current collector plate **49** positioned therebetween. The second pressure-supporting end plate assembly **4** comprises a second end plate **40,** which comprises a second end plate surface **41,** a first side face **42,** a second side face **43,** a third side face **44,** and a fourth side face **45.** The first side face **42** and the second side face **43** respectively form corresponding cooling water inlet and outlet ports **46a, 46b** and corresponding hydrogen inlet and outlet ports **47a, 47b.** The third side face **44** and the fourth side face **45** respectively form air inlet and outlet ports **48a, 48b.**

To assemble the above discussed structure, a pressure-applying structure **5** is employed to combine and retain the fuel cell stack **1,** the first pressure-supporting end plate assembly **2,** the first current collector plate **26,** the pressure-supporting structure **3,** the second pressure-supporting end plate assembly **4,** and the second current collector plate **49** together. In the instant embodiment, the pressure-applying structure **5** is comprised of a pressure-applying plate **51** and a pair of side plates **52, 53** extending from opposite side edges of the pressure-applying plate **51.** The two side plates **52, 53** form an open end **54** therebetween and each forms, at a location close to the open end **54,** a row of positioning structures **521, 531** corresponding to the coupling section **21** of the first end plate **20.** The positioning structures can be coupling holes.

As shown in **Figure 1****,** the side plate **52** forms a hollow section **522** at a central portion thereof to allow protruding ends **261, 491** of the first current collector plate **26** and the second current collector plate **49** to extend outward therethrough. The two side plates **52, 53** form guiding holes **523, 532, 524, 533** corresponding to the cooling water inlet and outlet ports **24a, 24b, 46a, 46b** and also forms guiding holes **525, 534, 526, 535** corresponding to the hydrogen inlet and outlet ports **25a, 25b, 47a, 47b.**

By using proper clamping jigs, the fuel cell stack **1,** the first pressure-supporting end plate assembly **2,** the first current collector plate **26,** the pressure-supporting structure **3,** the second pressure-supporting end plate assembly **4,** the second current collector plate **49,** and the pressure-applying structure **5** can be assembled together with (see **Figures 3** and **4**) so that the pressure-applying plate **51** of the pressure-applying structure **5** abuts against the second end plate surface **41** of the second pressure-supporting end plate assembly **4** and the protruding ends **261, 491** of the first current collector plate **26** and the second current collector plate **49** extending through the hollow section **522** of the side plate **52.** A plurality of fasteners **6** are set to respectively engage the apertures **211, 212** of the coupling section **21** of the first pressure-supporting end plate assembly **2** via the positioning structures **521, 531** of the side plates **52, 53.**

In this way, the pressure-supporting structure **3** that is interposed between the first end plate **20** and the coupling section **21** of the first pressure-supporting end plate assembly **2** applies, via the first pressure-supporting end plate assembly **2,** a pressure to the fuel cell stack **1** in a direction toward the second pressure-supporting end plate assembly **4** to provide the requisite contact pressure for individual fuel cell units **13.**

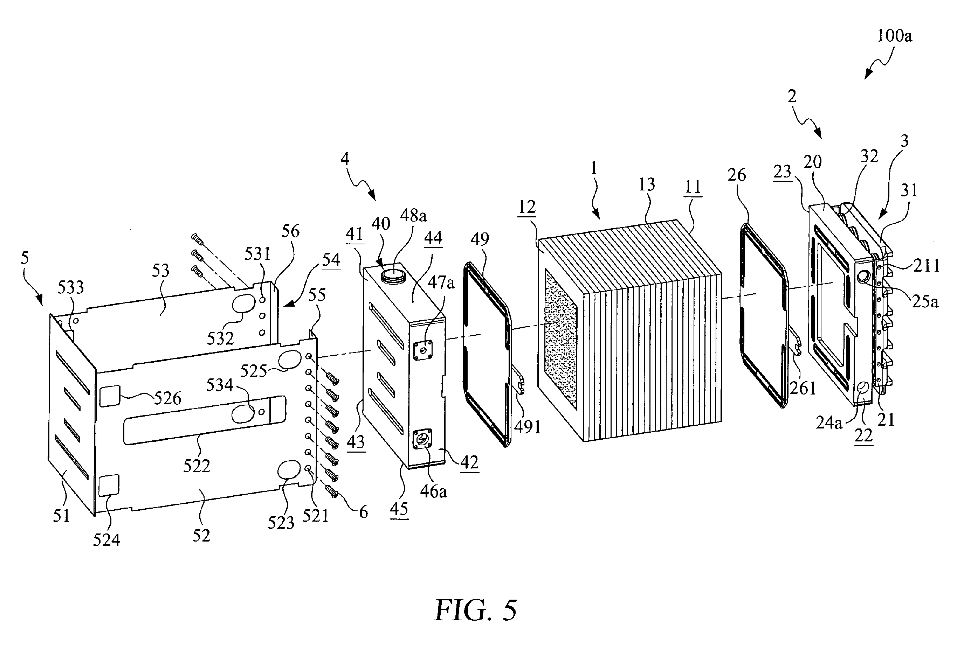

Referring to **Figure 5****,** which shows an exploded view of a second embodiment in accordance with the present invention, the second embodiment provides a pressure-supporting assembly structure **100a** for a fuel cell stack, of which most of the components/parts are similar to the counterparts of the pressure-supporting assembly structure **100** of the first embodiment, so that identical components/parts are designated with the same reference numerals for simplicity and correspondence with each other. The difference between the first and second embodiments resides in that in the second embodiment, the side plates **52, 53** of the pressure-applying structure **5** form support flanges **55, 56** that respectively extend from ends of the side plates **52, 53** adjacent to the positioning structures **521, 531.** Thus, when the components of the present invention are assembled together, the coupling section **21** of the first pressure-supporting end plate assembly **2** is positioned against the support flanges **55, 56** of the side plates **52, 53** of the pressure-applying structure **5** and in this way, the strength of the assembled structure of the fuel cell stack in accordance with the present invention is enhanced. The assembling process of the second embodiment is substantially identical to that of the first embodiment and thus no repeat of details is needed. Further, in accordance with the present invention, the positioning structures **521, 531** may be alternatively or additionally formed on the support flanges **55, 56** and correspondingly, the apertures **211, 212** of the coupling section **21** of the first pressure-supporting end plate assembly **2** are made at corresponding locations and they are then jointed together by the fasteners **6.**

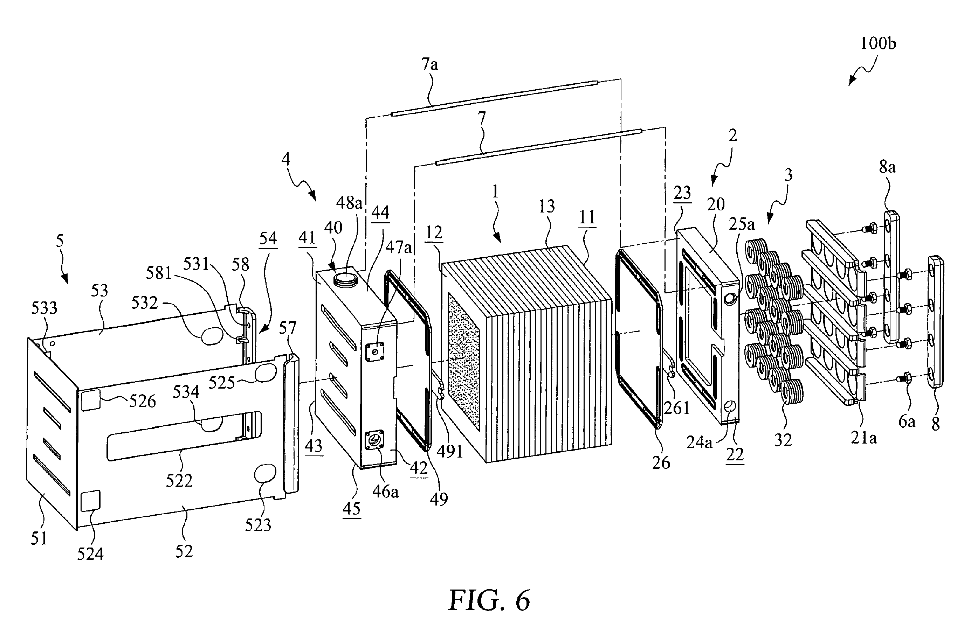

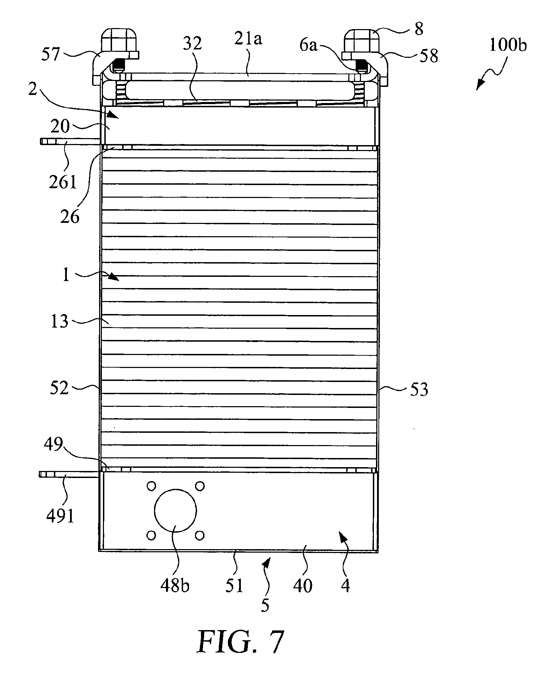

Referring to **Figures 6** and **7****,** which shows, respectively, an exploded view and a bottom view of a third embodiment of the present invention. The third embodiment provides a pressure-supporting assembly structure **100b** for a fuel cell stack, which comprises components/parts most of which are similar to the counterparts of the second embodiment, so that identical components/parts are designated with the same reference numerals for correspondence therebetween. The difference resides in that in the third embodiment, the two side plates **52, 53** of the pressure-applying structure **5** are provided with retainers **57, 58** at free ends thereof respectively. The retainers **57, 58** form positioning structures **521, 531** respectively and ribs **571, 581.** Further, a pair of positioning bars **7, 7a** is provided and extends between the first pressure-supporting end plate assembly **2** and the second pressure-supporting end plate assembly **4.**

When the fuel cell stack **1,** the first pressure-supporting end plate assembly **2,** the first current collector plate **26,** the pressure-supporting structure **3,** the second pressure-supporting end plate assembly **4,** the second current collector plate **49,** the pressure-applying structure **5,** and the positioning bars **7, 7a** are assembled together by using a proper clamping jig, a plurality of fasteners 6a are set to engage a coupling section **21a** of the first pressure-supporting end plate assembly **2** through the positioning structures **521, 531** of the retainers **57, 58.** Consequently, the resilient elements **32** that are interposed between the first end plate **20** and the coupling section **21a** of the first pressure-supporting end plate assembly **2** may apply, via the first pressure-supporting end plate assembly **2,** a pressure to the fuel cell stack **1** in a direction toward the second pressure-supporting end plate assembly **4.** By adjusting the depth of the fasteners **6a** set in the positioning structures **521, 531,** the contact pressure applied between the fuel cell units **13** and the two end plates **20, 40** can be properly adjusted. Certainly the pressure-applying structure **5** of the instant embodiment can be modified to comprise the support flanges as discussed with reference to **Figure 5****.**

As shown in the drawings, the retainers **57, 58** that are set at the free ends of the two side plates **52, 53** are respectively provided with protective covers **8, 8a** for protection of the fasteners **6a** that are set in the positioning structures **521,** 531.

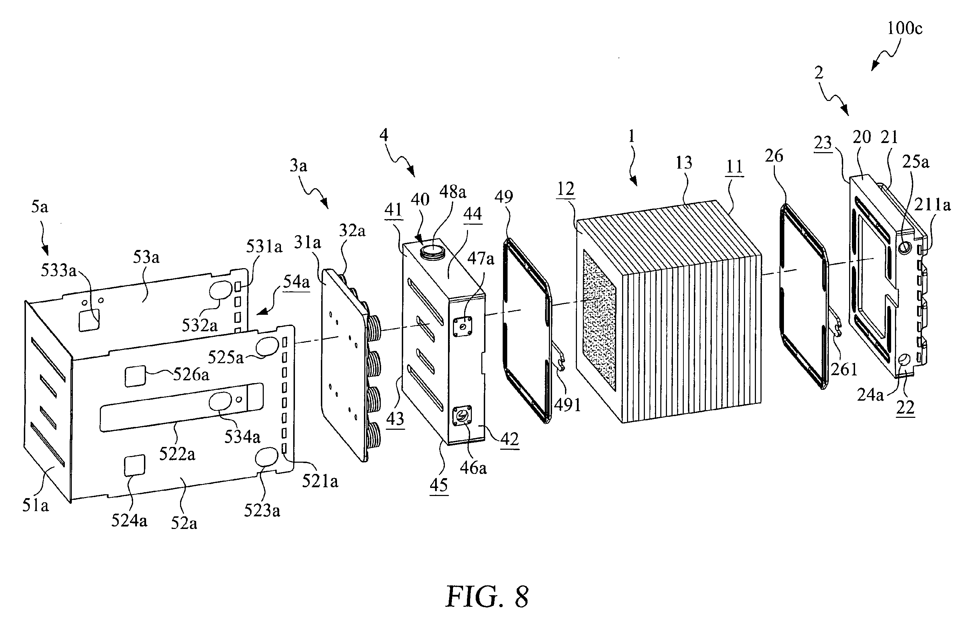

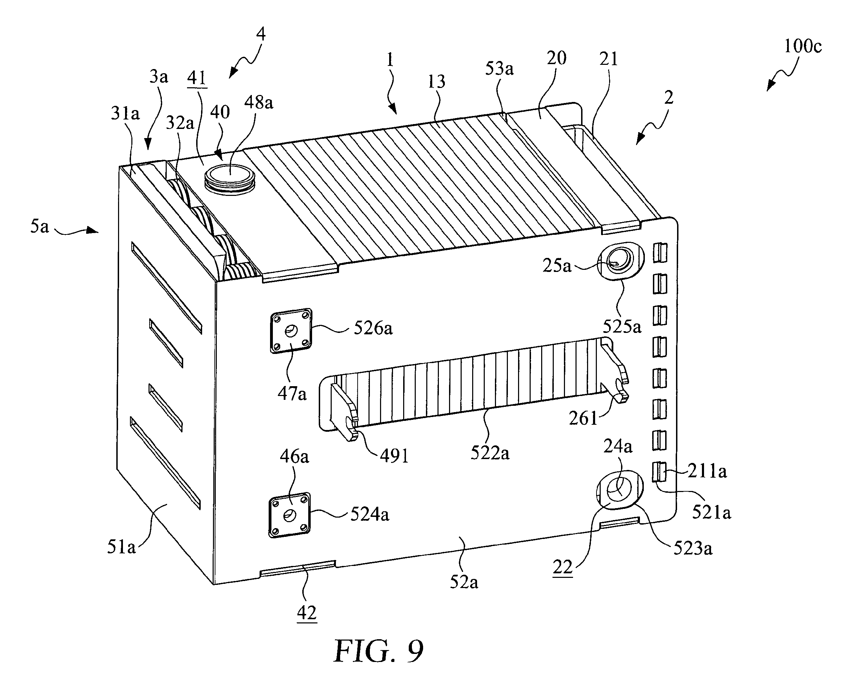

Referring to **Figures 8** and **9****,** which show, respectively, an exploded view and a perspective view of a fourth embodiment of the present invention, the fourth embodiment of the present invention provides a pressure-supporting assembly structure **100c** for a fuel cell stack, which comprises components/parts most of which are similar to the counterparts of the first embodiment, so that identical components/parts are designated with the same reference numerals for correspondence therebetween. The difference resides in that in the fourth embodiment, a pressure-supporting structure **3a** is set between a pressure-applying structure **5a** and the second pressure-supporting end plate assembly **4.** The pressure-applying structure **5a** comprises positioning structures **521a, 531a** that are made in the form of slots to be fit over coupling bosses **211a, 212a** projecting from the coupling section **21** of the first end plate **20.** The pressure-applying structure **5a** has side plates **52a, 53a** that form guiding holes **524a, 526a, 533a, 535a** at location corresponding to cooling water inlet and outlet ports **46a, 46b** and hydrogen inlet and outlet ports **47a, 47b.** In addition, the first end plate **20** and the coupling section **21** can be integrally formed together as a unitary device, and resilient elements **32a** and pressure-applying plate **51a** can be combined to thereby omit the pressure-supporting plate **31a.**

Again, the assembling process is the same as what discussed previously and no repeat description will be given here. When the pressure-applying structure **5a** and other components of the present invention are assembled together, the pressure-supporting structure **3a** that is interposed between the pressure-applying structure **5a** and the second pressure-supporting end plate assembly **4** applies a pressure to the fuel cell stack **1** in a direction from the second pressure-supporting end plate assembly **4** toward the first pressure-supporting end plate assembly **2** to provide the requisite contact pressure for individual fuel cell units **13.**

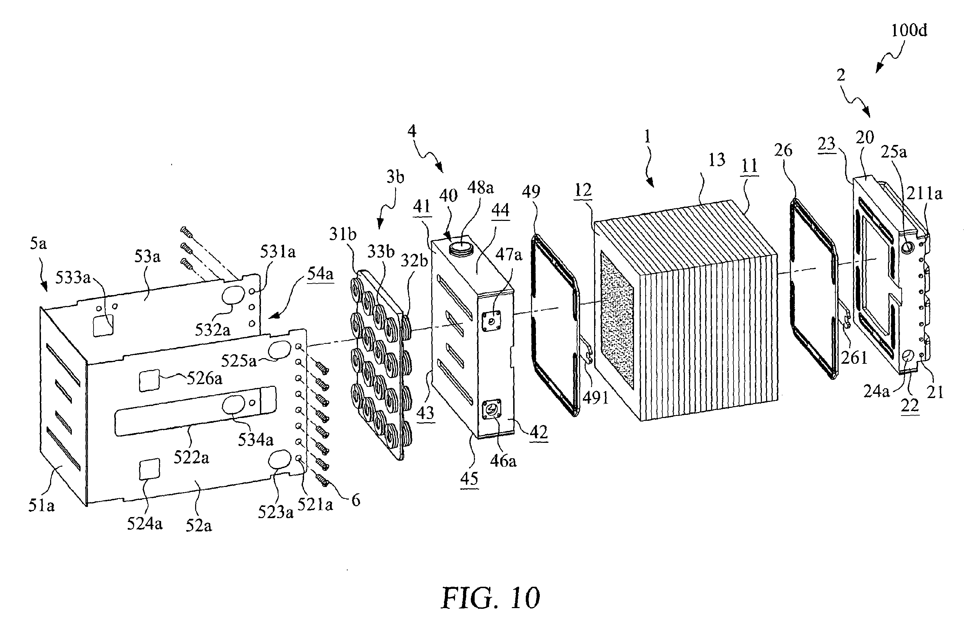

Referring to **Figure 10****,** which shows an exploded view of a fifth embodiment of the present invention, the fifth embodiment provides a pressure-supporting assembly structure **100d** for a fuel cell stack, which comprises components/parts most of which are similar to the counterparts of the fourth embodiment, so that identical components/parts are designated with the same reference numerals for correspondence therebetween. The difference resides in that in the fifth embodiment, a pressure-supporting structure **3b** forms pressure-supporting holes **33b** that extend completely through a pressure-supporting plate **31b** to receive and hold resilient elements **32b** therein respectively. The assembling process of the instant embodiment is similar to what discussed previously and no repeated description with be given herein. Alternatively, the pressure-supporting holes **33b** can be formed in the pressure-applying plate **51a** so that the pressure-supporting plate **31b** can be omitted.

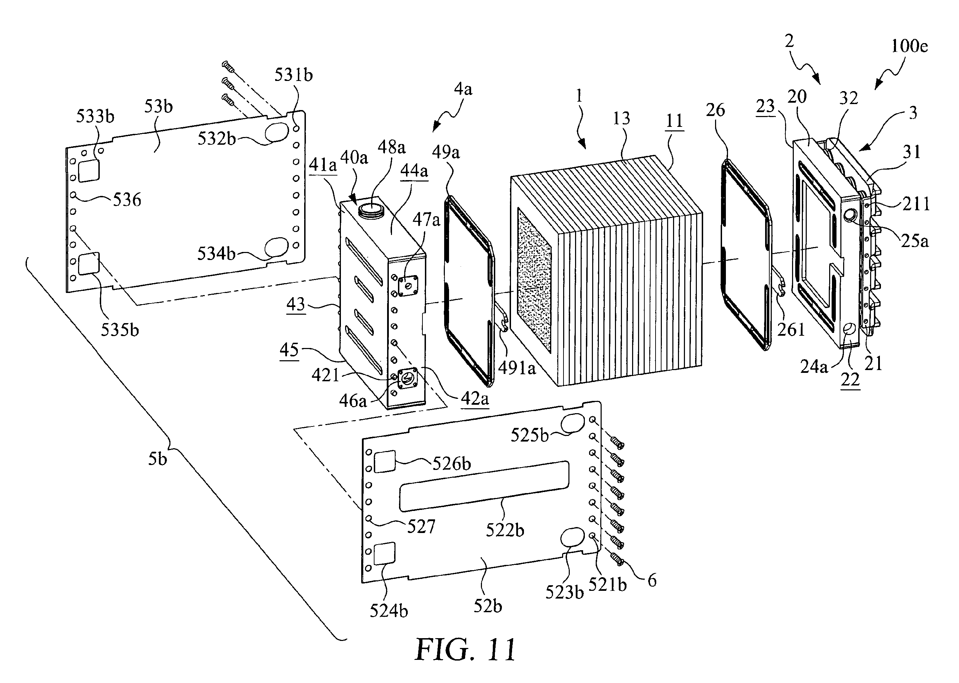

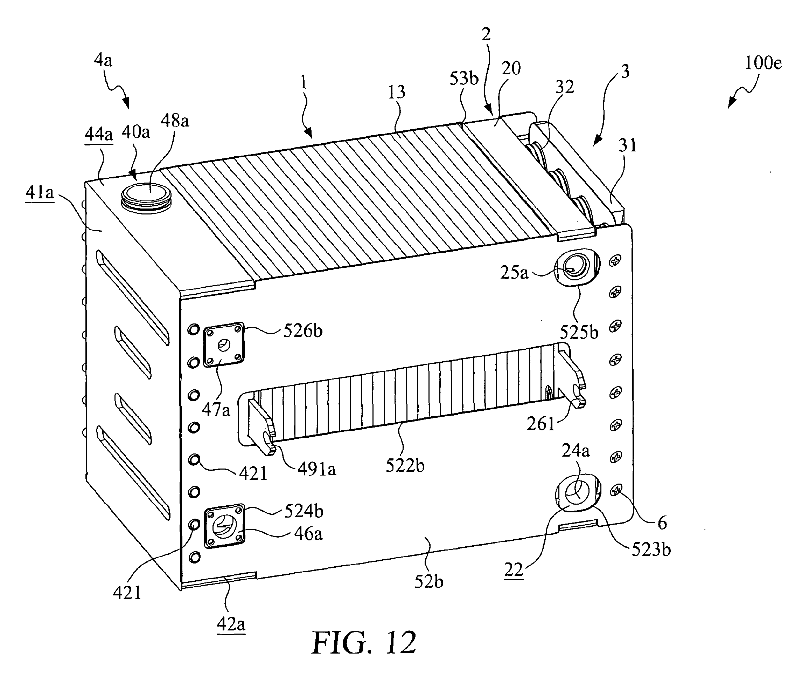

Referring to **Figures 11** and **12****,** which show, respectively, an exploded view and a perspective view of a sixth embodiment of the present invention, the sixth embodiment provides a pressure-supporting assembly structure **100e** for a fuel cell stack, which comprises components/parts most of which are similar to the counterparts of the first embodiment, so that identical components/parts are designated with the same reference numerals for correspondence therebetween. The difference resides in that in the sixth embodiment, the second pressure-supporting end plate assembly **4a** has a second end plate **40a** that has two side faces each forming a connection section **421** that comprises a plurality of projections, each having a side surface forming a recess or made in an L-shape for the purposes of preventing detachment of side plates **52b, 53b** therefrom.

As shown in the drawings, the pressure-applying structure **5b** is comprised of a pair of side plates **52b, 53b** each forming, at opposite ends thereof, positioning structures that correspond to the coupling section **21** of the first end plate **20** and the connection section **421** of the second end plate **40a.** In the instant embodiment, the positioning structures that are formed on the side plates **52b, 53b** each comprise a row of coupling holes **521b, 531b,** or a row of connecting holes **527, 536.**

During the process of sequentially assembling the above described structure, the connecting holes **527, 536** of the side plates **52b, 53b** are respectively connected to the connection sections **421** on the two side faces of the second end plate **40a.** A plurality of fasteners **6** extends through the coupling holes **521b, 531b** of the side plates **52b, 53b** to engage the apertures **211, 212** of the coupling section **21** of the first end plate **20.**

When the fuel cell stack **1,** the first pressure-supporting end plate assembly **2,** the first current collector plate **26,** the pressure-supporting structure **3,** the second pressure-supporting end plate assembly **4a,** the second current collector plate **49a,** and the pressure-applying structure **5b** are assembled together by using a proper clamping jig, the pressure-supporting structure **3** that is interposed between the first end plate **20** and the coupling section **21** of the first pressure-supporting end plate assembly **2** may apply, via the first pressure-supporting end plate assembly **2,** a pressure to the fuel cell stack **1** in a direction toward the second pressure-supporting end plate assembly **4a** to provide the requisite pressure between the fuel cell units **13.** Again, the pressure-supporting structure **3** can adopt the same design as the second pressure-supporting end plate assembly **4;** the ends of the two side plates **52b, 53b** may form support flanges as shown in **Figure 5****;** or the ends of the side plates **52b, 53b** may be coupled with retainers or forming support flanges on which the positioning structure are arranged so that when the depth of fasteners set in the positioning structures is changed, the contact pressure between the individual fuel cell units **13** and the two end plates **20, 40** can be adjusted, as that shown in **Figure 6****;** or the coupling holes **521b, 531b** of the two side plates **52b, 53b** and the apertures **211, 212** of the coupling section **21** can be replaced with the bosses illustrated in **Figure 8** **,** variation being selectively made to correspond to different applications.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A fuel cell stack assembly comprising:
a fuel cell stack having a first electrode side, a second electrode side, and at least one fuel cell unit;
a first pressure-supporting end plate assembly having a first end plate and a coupling section and being coupled to the first electrode side of the fuel cell stack;
a first current collector plate positioned between the first end plate and the first electrode side of the fuel cell stack;
a second pressure-supporting end plate assembly having a second end plate and being coupled to the second electrode side of the fuel cell stack;
a second current collector plate positioned between the second end plate and the second electrode side of the fuel cell stack; and
a pressure-applying structure comprising a pressure-applying plate and a pair of side plates, the side plates forming therebetween an open end, each side plate forming at the end thereof a positioning structure;
wherein the fuel cell stack, the first pressure-supporting end plate assembly, the first current collector plate, the second pressure-supporting end plate assembly, the second current collector plate, and the pressure-applying structure are assembled together so that the pressure-applying plate of the pressure-applying structure is set abutting against a surface of the second end plate of the second pressure-supporting end plate assembly and the open end of the pressure-applying structure is located on opposite sides of the first end plate and coupled to the coupling section of the first end plate through the positioning structures.

2. The fuel cell stack assembly as claimed in Claim 1, further comprising a pressure-supporting structure arranged between the first end plate and the coupling section of the first pressure-supporting end plate assembly.

3. The fuel cell stack assembly as claimed in Claim 1 further comprising a pressure-supporting structure arranged between the second end plate of the second pressure-supporting end plate assembly and the pressure-applying structure.

4. The fuel cell stack assembly as claimed in Claim 2 or 3, wherein the pressure-supporting structure comprises at least one resilient element.

5. The fuel cell stack assembly as claimed in Claim 2 or 3, wherein the pressure-supporting structure comprises a pressure-supporting plate and at least one resilient element, the pressure-supporting plate forming at least one pressure-supporting hole respectively receiving the resilient element.

6. The fuel cell stack assembly as claimed in Claim 1, wherein the side plates of the pressure-applying structure form a hollow section through which protruding ends of the first current collector plate and the second current collector plate project outward.

7. The fuel cell stack assembly as claimed in Claim 1, wherein the side plates of the pressure-applying structure have free ends from which support flanges extend.

8. The fuel cell stack assembly as claimed in Claim 1, wherein the side plates of the pressure-applying structure have free ends to which retainers are respectively provided.

9. The fuel cell stack assembly as claimed in Claim 7 or 8, wherein the support flanges or the retainers of the ends of the side plates of the pressure-applying structure are respectively provided with positioning structures.

10. The fuel cell stack assembly as claimed in Claim 1, further comprising a pair of positioning bars extending between the first pressure-supporting end plate assembly and the second pressure-supporting end plate assembly.

11. The fuel cell stack assembly as claimed in Claim 1, wherein the positioning structure of pressure-applying structure is connected by at least one fastener.

12. The fuel cell stack assembly as claimed in Claim 1, further comprising a protective cover for each positioning structure of the pressure-applying structure.

13. The fuel cell stack assembly as claimed in Claim 1, wherein the pressure-applying plate of the pressure-applying structure comprises at least one resilient element.

14. A fuel cell stack assembly for a fuel cell stack comprising:
a fuel cell stack having a first electrode side, a second electrode side, and at least one fuel cell unit;
a first pressure-supporting end plate assembly having a first end plate and a coupling section and being coupled to the first electrode side of the fuel cell stack;
a first current collector plate positioned between the first end plate and the first electrode side of the fuel cell stack;
a second pressure-supporting end plate assembly having a second end plate and a connection section and being coupled to the second electrode side of the fuel cell stack;
a second current collector plate positioned between the second end plate and the second electrode side of the fuel cell stack; and
a pressure-applying structure comprising a pair of side plates, the side plates each having opposite ends forming positioning structures corresponding to the coupling section of the first end plate and the connection section of the second end plate;
wherein the fuel cell stack, the first pressure-supporting end plate assembly, the first current collector plate, the second pressure-supporting end plate assembly, the second current collector plate, and the pressure-applying structure are assembled together in such a way that the positioning structures of the pressure-applying structure are coupled to the coupling section of the first end plate and the connection section of the second end plate.

15. The fuel cell stack assembly as claimed in Claim 14, further comprising a pressure-supporting structure arranged between the first end plate and the coupling section of the first pressure-supporting end plate assembly.

16. The fuel cell stack assembly as claimed in Claim 15, wherein the pressure-supporting structure comprises at least one resilient element.

17. The fuel cell stack assembly as claimed in Claim 15, wherein the pressure-supporting structure comprises a pressure-supporting plate and at least one resilient element, the pressure-supporting plate forming at least one pressure-supporting hole respectively receiving the resilient element.

18. The fuel cell stack assembly as claimed in Claim 14, wherein the side plates of the pressure-applying structure form a hollow section through which protruding ends of the first current collector plate and the second current collector plate project outward.

19. The fuel cell stack assembly as claimed in Claim 14, wherein the side plates of the pressure-applying structure have free ends forming support flanges or retainers.

20. The fuel cell stack assembly as claimed in Claim 14, wherein the positioning structure of the pressure-applying structure is connected by at least one fastener.
